# EUROPEAN PATENT APPLICATION

(11) **EP 2 360 902 A2**
(43) Date of publication of application: **24.08.2011**
(21) Application number: 11154189.2
(22) Date of filing: 11.02.2011
(51) Int. Cl.: H04M 1/725

(54) **Method and apparatus for providing history of information associated to time information**

(30) Priority: 11.02.2010 KR 20100012931
(71) Applicant: SAMSUNG ELECTRONICS CO., LTD., Suwon-si, Gyeonggi-do (KR)
(72) Inventor: Seo, Ae Jung, Gyeonggi-do (KR); Kim, Hyo Young, Gyeonggi-do (KR); Shin, Seung Woo, Gyeonggi-do (KR)
(74) Representative: Birchenough, Lewis

(57) **Abstract**

A method and an apparatus for providing a history of information associated with time information capable of displaying internal or external associated information associated with time information as one information item and capable of intuitively providing a history of information associated with a corresponding time by controlling time information are provided. The method for providing information in a mobile terminal includes, displaying an information item including a combination of time information and associated information, updating and displaying the associated information as time information goes by, extracting associated information corresponding to changed time information when the time information changes according to a control event, and displaying a history of associated information corresponding to the changed time information.

## Description

### BACKGROUND OF THE INVENTION

### 1. Field of the Invention:

The present invention relates to a mobile terminal. More particularly, the present invention relates to a mobile terminal and a method capable of providing and controlling time based information of the mobile terminal.

### 2. Description of the Related Art:

In recent years, with the increased development of information, communication, and semiconductor technologies, the use of mobile terminals having many advanced functions is rapidly increasing. For example, many types of multi-media functions, such as a TeleVision (TV) watching function (e.g., mobile broadcasting, such as Digital Multimedia Broadcasting (DMB), and Digital Video Broadcasting (DVB)), a music playing function (e.g., Motion Pictures Expert Group (MPEG) Audio Layer-3 (MP3)), a photographing function, an Internet accessing function, and a dictionary searching function, are additionally provided to a mobile communication terminal as supplemental features in addition to voice calling and general communication functions, such as message transmission/reception.

When schedule information is stored in a mobile terminal, the mobile terminal may output corresponding schedule information through a screen to allow a user to manage a schedule. Furthermore, the mobile terminal includes a menu for setting an idle screen. A clock, a calendar, schedule information, or weather information can be displayed on the idle screen as the menu for setting the idle screen. For example, when the user sets the idle screen by an analog clock, an analog clock item similar to a real analog clock is displayed on the idle screen.

However, a mobile terminal of the related art is inconvenient since it needs to execute a separate menu to confirm old schedule information or next schedule information by instantaneously outputting a set time with schedule information. Moreover, a clock menu of the mobile terminal of the related art does not provide special functions except for a time information providing function.

Therefore, a need exists for a control method of associating and displaying time information and associated information with each other and of supporting a history of information associated with corresponding time information changed by controlling the time information.

### SUMMARY OF THE INVENTION

An aspect of the present invention is to address at least the above mentioned problems and/or disadvantages and to provide at least the advantages described below. Accordingly, an aspect of the present invention is to provide time information and associated information mapped thereto.

Another aspect of the present invention is to implement a user interface environment capable of intuitively providing a history of information associated with a corresponding time by controlling time information in a mobile terminal.

Still another aspect of the present invention is to provide a control method of associating and displaying time information and associated information with each other and of supporting a history of information associated with corresponding time information changed by controlling the time information.

Still a further aspect of the present invention is to support a history of associated time mapped to time information according to a time information variation to improve utility and convenience of a mobile terminal.

In accordance with an aspect of the present invention, a method for providing information in a mobile terminal is provided. The method includes displaying an information item including a combination of time information and associated information, updating and displaying the associated information as time information goes by, extracting associated information corresponding to changed time information when the time information changes according to a control event, and displaying a history of associated information corresponding to the changed time information.

In accordance with another aspect of the present invention, a mobile terminal is provided. The mobile terminal includes a display unit for displaying at least one information item including a combination of time information and associated information, a storage unit for storing associated information corresponding to the time information, and a controller for controlling display of at least one information item including a combination of time information and associated information of the mobile terminal, and for controlling display of an associated information history corresponding to changed time information.

As illustrated above, in the method and apparatus for providing a history of information associated with time information, a method supporting a history function of corresponding associated information according to controlled time information upon providing time information and information associated therewith is provided.

The method for supporting a history function of associated information according to exemplary embodiments of the present invention may provide optimal environments for displaying various associated information mapped to time information and history information thereof in a mobile terminal, and implement an output function by time periods of various associated information according to the control by a user.

Because a history of associated information corresponding to a time is displayed according to time information control of a user, exemplary embodiments of the present invention may intuitively provide associated information with respect to the past, the present and the future corresponding to time flow.

Moreover, the history according to time information can be controlled and confirmed as an intuitive medium, such as an hour hand or a minute hand. In addition, exemplary embodiments of the present invention can avoid a complicated idle screen arrangement for acquiring various information using an information item including a combination of time information and associated information.

A method for supporting a history function of information associated with time information according to exemplary embodiments of the present invention may improve utility, convenience, and competitive force of a mobile terminal by integration and visualization of time information of the mobile terminal and respective associated information, such as schedule information, weather information, stock information, and the like, mapped thereto.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description in conjunction with the accompanying drawings, in which:

FIG. 1 is a block diagram schematically illustrating a configuration of a mobile terminal according to an exemplary embodiment of the present invention;

FIGs. 2 through 4 are views illustrating an information item including a combination of time information and associated information according to exemplary embodiments of the present invention;

FIG. 5 is a view illustrating a method for providing a history function of weather information mapped to time information according to an exemplary embodiment of the present invention;

FIG. 6 is a view illustrating a method for providing a history function of schedule information mapped to time information according to an exemplary embodiment of the present invention;

FIG. 7 is a view illustrating a method for providing a history function of stock information mapped to time information according to an exemplary embodiment of the present invention;

FIG. 8 is a view illustrating a method for providing an information item with time information and associated information according to an exemplary embodiment of the present invention; and

FIG. 9 is a flowchart illustrating a method for controlling a history function of associated information mapped to time information according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention relate to a mobile terminal and a method for controlling a history function of associated information thereof that may display internal information of the mobile terminal and information provided from an external source (e.g., weather forecasters, a mobile communication enterprise server, etc.) to be associated with time information, and intuitively confirm a history of associated information according to a corresponding time by controlling time information. An exemplary embodiment of the present invention forms one group with time information and another group with associated information on an idle screen to provide present time information and information associated therewith. Furthermore, exemplary embodiments of the present invention may intuitively provide a history of information associated with a corresponding time by controlling time information according to a user interaction. Namely, an exemplary embodiment of the present invention allows a user to confirm a history of associated information with respect to the past and the future based on current time information without switching of a screen on an idle screen.

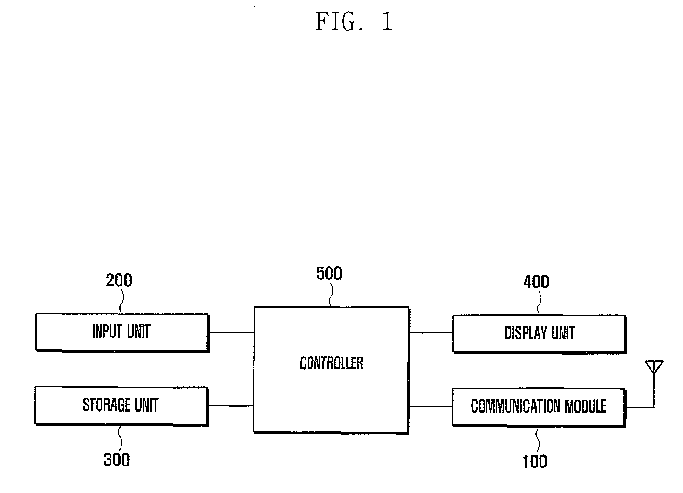

FIGs. 1 through 9, discussed below, and the various exemplary embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the invention. Terms first, second, and the like are used to differentiate between objects having the same terminology and are in no way intended to represent a chronological order, unless where explicitly state otherwise. A set is defined as a non-empty set including at least one element.

A configuration of a mobile terminal and an operation control method thereof according to an exemplary embodiment of the present invention will be described with reference to FIGs. 1 through 9. However, a configuration of a mobile terminal and an operation control method thereof are not limited to the following exemplary embodiments.

FIG. 1 is a block diagram schematically illustrating a configuration of a mobile terminal according to an exemplary embodiment of the present invention.

Referring to FIG. 1, a mobile terminal includes a communication module 100, an input unit 200, a storage unit 300, a display unit 400, and a controller 500. The mobile terminal may further include various known constructions, such as an audio processor with a microphone and a speaker, a digital broadcasting module for receiving and playing digital broadcasting (e.g., mobile broadcasting, such as Digital Multimedia Broadcasting (DMB) or Digital Video Broadcasting (DVB)), a camera module for a photographing function, and a Bluetooth communication module for performing a Bluetooth communication function, such that a detailed description and drawings thereof are omitted.

The communication module 100 denotes at least one module supporting a communication function supported by a mobile terminal. The communication module 100 may include a Radio Frequency (RF) module for performing a general communication function, such as a voice call or a message transmission and reception, an Internet communication module for performing an Internet communication function, and the like. More particularly, the communication module 100 denotes an RF communication module or an Internet communication module for receiving information provided from an external source (e.g., weather forecasters, a mobile communication enterprise server, etc.). The communication module 100 transmits an associated information request signal to an external server under the control of the controller 500 and receives and transfers an associated information response signal provided according thereto to the controller 500. The communication module 100 may receive an associated information signal periodically provided from an external source.

The input unit 200 detects a user operation, and generates and transfers a corresponding input signal to the controller 500. The input unit 200 can be configured by a plurality of buttons. More particularly, the input unit 200 may include at least one button generating an input signal for updating associated information. The input unit 200 may also include at least one button generating an input signal according to a control event, a reset event, and a toggle event to be described later.

The storage unit 300 stores all types of programs and data executed and processed by the mobile terminal. For example, the storage unit 300 may continuously or temporarily store an operating system of the mobile terminal, applications and data related to a display control operation of the display unit 400, and applications and data related to execution of a history function of information associated with time information. The storage unit 300 may include a storing area (not shown) for continuously or temporarily storing data (e.g., associated information by time periods, associated information by days, associated information by weeks, and associated information by months) and for providing a history of associated information.

The display unit 400 provides execution screens of applications supported by the mobile terminal. For example, the display unit 400 provides execution screens for a message function, an electronic mail function, an Internet function, a multi-media function, a searching function, a communication function, an electronic book reading function (e.g., an e-book), a moving image function, a photographing function, a photograph viewing function, a TeleVision (TV) watching function (e.g., mobile broadcasting, such as a DMB or a DVB), and a music playing function (e.g., Motion Pictures Expert Group (MPEG) Audio Layer-3 (MP3)). Typically, a Liquid Crystal Display (LCD) is used as the display unit 400. Another display device, such as an Organic Light Emitting Diode (OLED) or an Active Matrix OLED (AMOLED), can be used as the display unit 400. The display of screen data by the display unit 400 may be provided in either a horizontal mode or a vertical mode.

The display unit 400 may include a touch input unit (not shown). Namely, the display unit 410 can be implemented by a touch screen. The display unit 400 generates an input signal according to a control event, a reset event, and a toggle event as illustrated below by a configuration of the touch screen, and transfers the generated input signal to the controller 500.

More particularly, the display unit 400 constructs and provides time information and other associated information as one information item (e.g., a widget) upon providing the time information through an idle screen. Furthermore, the display unit 400 provides a history of information associated with controlled time information using the information item as well as a current time through the information item to static and dynamic Graphical User Interfaces (GUIs). In an exemplary implementation, the display unit 400 provides an information item, an associated information selection menu, and a toggle area on the idle screen as illustrated below.

The controller 500 controls overall operations of the mobile terminal. The controller 500 displays and processes internal information of the mobile terminal or external information associated with time information of the mobile terminal. That is, the controller 500 processes the time information and the associated information to be displayed as one information item on the idle screen of the mobile terminal. Furthermore, the controller 500 controls a history of information associated with corresponding time information changed upon controlling an associated information history function to be displayed.

For example, the controller 500 provides a clock & weather item including a combination of time information and weather information on a display unit 400. When the time information is controlled in the clock & weather item, the controller 500 provides a history of weather information of a corresponding time period according to a time information variation. The controller 500 provides a clock & schedule item including a combination of time information and schedule information on the display unit 400. When the time information is controlled from the clock & schedule item, the controller 500 provides a history of schedule information of a corresponding time period according to a time information variation. The controller 500 provides a clock & stock item including a combination of time information and stock information on the display unit 400. When the time information is controlled from the clock & stock item, the controller 500 provides a history of stock information of a corresponding time period according to a time information variation.

Meanwhile, respective associated information of a corresponding time period according to a time information variation can be previously stored in the storage unit 300. The controller 500 may store internal information or external information by time periods according to a set period and store respective associated information to be mapped to the time information in the storage unit 300. The controller 500 supports a history function with respect to the past, the present, and the future according to stored time information and associated information.

When a gesture controlling the time information from the information item as illustrated above is input, the controller 500 discriminates associated information provided through a current information item. Furthermore, the controller 500 extracts a history of information associated with a corresponding time changed according to a gesture from the associated information, and controls a changed screen display. In addition, the controller 500 performs all kinds of control operations related to function control according to execution of an application and function control of an associated information history. These will be described in more detail below.

The exemplary mobile terminal illustrated in FIG. 1 may be implemented by any type of mobile terminal, such as a bar type, a folder type, a slide type, a swing type, and a flip type. The mobile terminal may include information communication devices, multi-media devices, and application devices thereof. For example, the mobile terminal may include a small device, such as a mobile communication terminal, a Portable Multimedia Player (PMP), a digital broadcasting player, a Personal Digital Assistant (PDA), a music player (e.g., an MP3 player), a portable game terminal, and a Smart Phone operating based on communication protocols corresponding to various communication systems. Also, an exemplary method for supporting an associated information history function according to a time information variation may be applied to other devices, such as a Television (TV), a Large Format Display (LFD), a Digital Signage (DS), a media pole, a Personal Computer (PC), a Notebook computer, and the like.

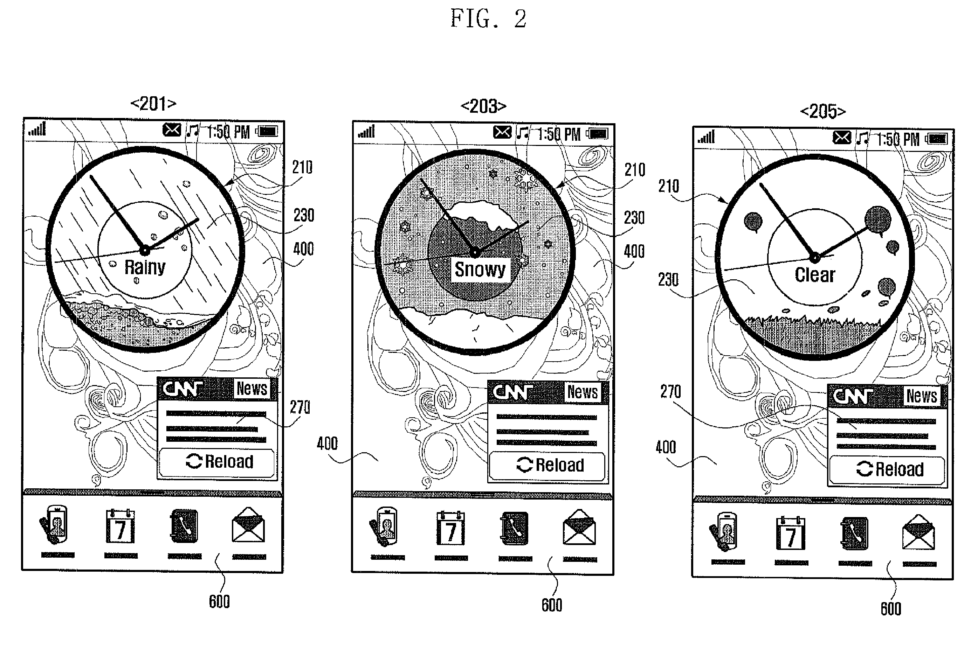

FIGs. 2 through 4 are views illustrating an information item including a combination of time information and associated information according to exemplary embodiments of the present invention.

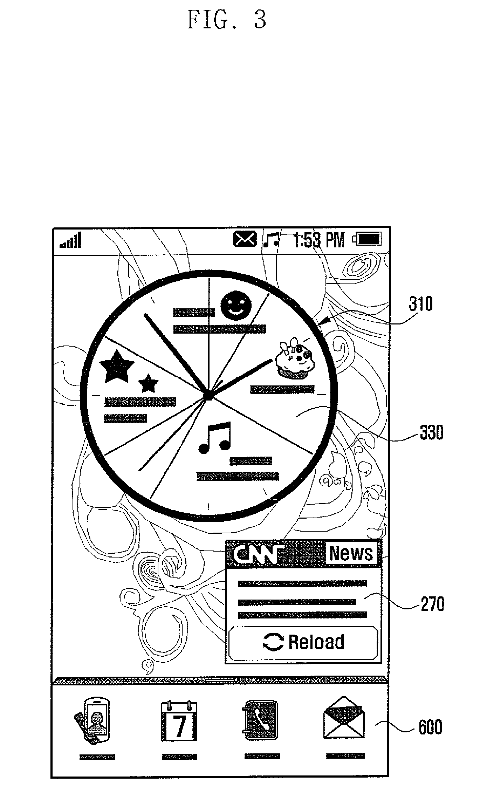

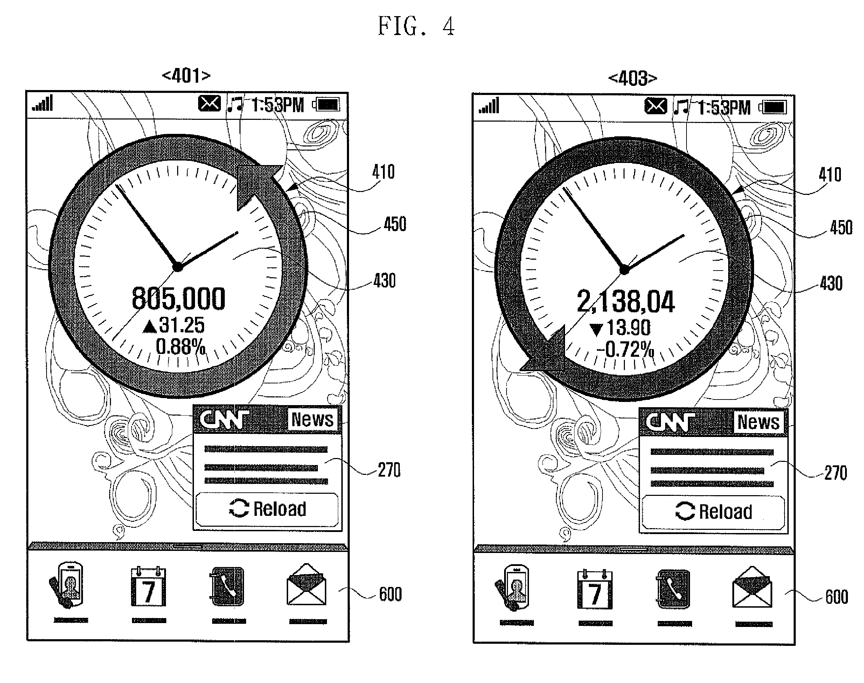

FIG. 2 illustrates an information item including a combination of time information and weather information. FIG. 3 illustrates an information item including a combination of time information and schedule information. FIG. 4 illustrates an information item including a combination of time information and stock information. In addition, exemplary embodiments of the present invention can include a combination of various associated information related to time, such as an information item including a combination of time information and broadcasting information (e.g., broadcasting schedule information) or an information item including a combination of time information and time table information (e.g., time table information in school). However, a detailed description and drawings thereof are omitted.

Referring to FIGs. 2 through 4, a display unit 400 may display an information item (e.g., a widget) 210, 310, 410 including a combination of time information and associated information (e.g., weather information, schedule information, stock information, etc.), another item (e.g., a widget) 270 for providing information according to a user setting, and a menu area 600 including at least one sub-menu for option setting, execution of a specific application, a menu, and the like.

Referring to FIG. 2, it is assumed that weather information is provided as associated information. That is, it is assumed that the information item 210 is a time & weather item including a combination of time information and weather information. Furthermore, the mobile terminal may execute the time & weather item 210 in a set way. For example, the mobile terminal may execute the time & weather item 210 using a hot key button (not shown) in an input unit 200, a touch input of a touch area (e.g., a toggle area) allocated for execution of the time & weather item 210 on the display unit 400, or menu selection of the menu area 600.

When the execution of the time & weather item 210 is input, the time & weather item 210 is displayed on set areas 201, 203, and 205 of FIG. 2. Upon execution of the time & weather item 210, an hour hand, a minute hand, or a second hand indicating time information on the time & weather item 210 are adjusted (rotated) and displayed at corresponding positions corresponding to current time information of the mobile terminal. Weather information corresponding to current time information of the mobile terminal is displayed on an information area 230. For example, reference numeral 201 represents a rainy weather state, reference numeral 203 represents a snowy weather state, and reference numeral 205 represents a sunny weather state. Furthermore, a user may determine weather information of a different time period by controlling an hour hand (or minute hand) of a time & weather item 210 to determine weather information of the past or the future.

Referring to FIG. 3, it is assumed that schedule information is provided as associated information. Namely, it is assumed that the information item 310 is a time & schedule item including a combination of time information and schedule information. Moreover, the mobile terminal may execute the time & schedule item 310 in a set way as mentioned above.

When execution of the time & schedule item 310 is input, as shown in FIG. 3, the time & schedule item 310 is displayed on a set area. Upon execution of the time & schedule item 310, an hour hand, a minute hand, or a second hand indicating time information in the time & schedule item 310 is adjusted (rotated) and displayed at positions corresponding to current time information of the mobile terminal. The schedule information set by the user is displayed on an information area 330. An area that includes information corresponding to current time information, from among schedule information in the information area 330, can be displayed to be distinguished (e.g., by highlighting, hatching, flickering, etc.) from other areas of schedule information.

The user can register schedule information using a schedule application. Moreover, the user may register schedule information using a menu setting in the time & schedule item 310. For example, after selecting a desired time period by controlling the hour hand and minute hand in the time & schedule item 310, the user can register schedule information with respect to a corresponding time period. In addition, the user can confirm a history of schedule information of a corresponding time period by controlling the hour hand or minute hand to determine a schedule of a time period (e.g., afternoon) not currently displayed through the time & schedule item 310.

Referring to FIG. 4, it is assumed that stock information is provided as associated information. Namely, it is assumed that the information item 410 is a time & stock item 410 including a combination of time information and stock information. Furthermore, the mobile terminal may execute the time & stock item 410 in a set way as illustrated earlier.

When the execution of the time & stock item 410 is input, the time & stock item 410 is displayed on set areas 401 and 403. Upon execution of the time & stock item 410, an hour hand, a minute hand, and a second hand indicating time information on the time & stock item 410 are adjusted (rotated) and displayed at corresponding positions corresponding to current time information of the mobile terminal. Moreover, stock information corresponding to current time information of the mobile terminal is displayed on information areas 430 and 450. More specifically, an information area may be divided into a first information area 430, numerically indicating a real-time stock price and a rise/fall rate, and a second information area 450, indicating rise/fall states with a GUI on characteristics of stock information.

For example, reference numeral 401 numerically indicates a stock and rise/fall rate of an item (or average of all items) on the first information area 430 according to a user setting, and an arrow is displayed pointing upward on the second information area 450 to indicate an increased state of the stock. Moreover, reference numeral 403 numerically indicates a stock and a rise/fall rate on the first information area 430 and an arrow is displayed pointing downward on the second information area 450 to indicate a reduced state of the stock. The arrows displayed in the first and second information areas, 430 and 450 respectively, may be displayed in one of various colors (e.g., green, red, etc.). The user may determine a stock information history of a corresponding time period by controlling an hour hand or a minute hand of a time & stock item 410 to confirm past stock information.

Meanwhile, although not shown and described in FIGs. 2 through 4, an associated information selection menu for selecting a detailed function of corresponding information associated with time information from the information item can be provided simultaneously with execution of an information item. For example, the associated information selection menu may be provided at a lower end of the time & weather item 210 in FIG. 2, and regional information for confirming weather information can be selected through the associated information selection menu. The associated information selection menu may be provided at a lower end of the time & schedule item 310 in FIG. 3, and morning schedule information, afternoon schedule information, and day schedule information can be selected using the associated information selection menu. The associated information selection menu may be provided at a lower end of the time & stock item 410 in FIG. 4, and a stock item may be selected using the associated information selection menu. Alternatively, the associated information selection menu may be provided at an area in the vicinity of an information item in a drop down menu form.

Moreover, an update period of associated information may depend on a user setting. For example, a user may set the update period of associated information in units of minutes, hours, and days. As an example, assuming that the update period is set to ten minutes, weather information of FIG. 2 may be provided by updating associated information acquired from an internal or external source every ten minutes. Furthermore, a refresh function may be provided to the associated information selection menu for user update of the associated information.

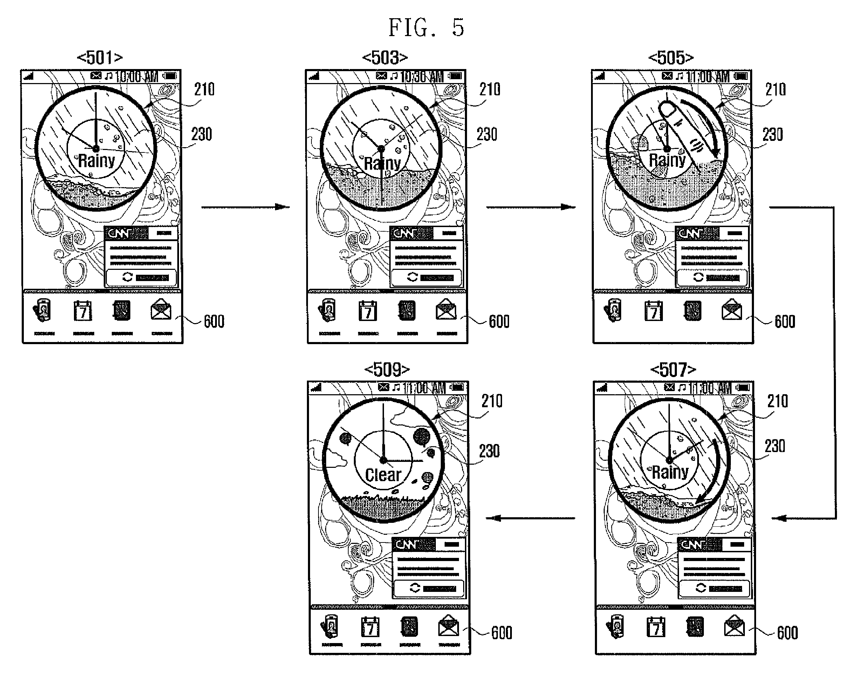

FIG. 5 is a view illustrating a method for providing a history function of weather information mapped to time information according to an exemplary embodiment of the present invention.

Referring to FIG. 5, as shown in reference numeral 501, it is assumed that an information item (e.g., a time & weather item) including a combination of time information and weather information is displayed on a display unit. The information item 210 provides time information of the mobile terminal according to a variation (rotation) of an hour hand, a minute hand, and a second hand, and provides weather information corresponding to current time information on an information area 230 with a GUI. The GUI may be provided in a still image form or a dynamic animation form. The weather information can be acquired from information received from an external source (e.g., weather forecasters, a mobile communication enterprise server, etc.). The weather information may be provided based on regional information according to a user setting. Moreover, the weather information may be provided based on location information of the mobile terminal. The weather information can be periodically received from an external source (e.g., weather forecasters, a mobile communication enterprise server, etc.). Moreover, the weather information can be received by sending a periodic request to an external source according to a user setting. In addition, the weather information may be provided in units of specific intervals (hours, weeks, etc.).

As shown in reference numerals 503 and 505, as time passes, weather information corresponding to time information is updated and displayed. For example, as shown in reference numerals 503 and 505, a precipitation amount of the information area 230 can be changed (gradually increased) and displayed.

Meanwhile, in states of reference numerals 501, 503, and 505, associated information with respect to the past or the future can be confirmed according to a time information variation. For example, as shown in reference numeral 505, an hour hand or a minute hand of the information item 210 may be selected to input a gesture of rotating clockwise. When the gesture input rotates the hour hand to 2 p.m., weather information corresponding to time information of 2 p.m. is displayed on the information area 230. In this case, when the hour hand rotates from 11 a.m. of reference numeral 505 to 2 p.m. of reference numeral 507, weather information corresponding to a time period may be continuously changed and provided to the information area 230 according to a time information variation. A precipitation amount in reference numeral 507 is reduced in comparison with reference numeral 505.

As previously illustrated, a gesture input according to a time information variation can be continuously performed in a state of reference numeral 507. Namely, as shown in reference 509, when the hour hand rotates to 3 p.m. by a gesture input, weather information corresponding to time information of 3 p.m. is displayed on an information area 230. Reference numeral 509 indicates sunny weather. Furthermore, a reset event can be input in a state of reference numeral 509. For example, a user may input a physical key for a reset event in the input unit 200 or a touch area for the reset event on the display unit 400. When the reset event is input, as shown in reference 509, provided time information and weather information according thereto are initialized and displayed as current time information of the mobile terminal and weather information according thereto.

Although not shown and described in FIG. 5, an hour hand or a minute hand may be selected in a state of reference numeral 505 to input a gesture of rotating counterclockwise. The gesture input allows a user to confirm a history of associated information with respect to the past. Furthermore, in a case of time information control using the hour hand, a history of associated information can be confirmed in units of hours. In a case of time information control using the minute hand, a history of fine associated information can be confirmed in units of minutes.

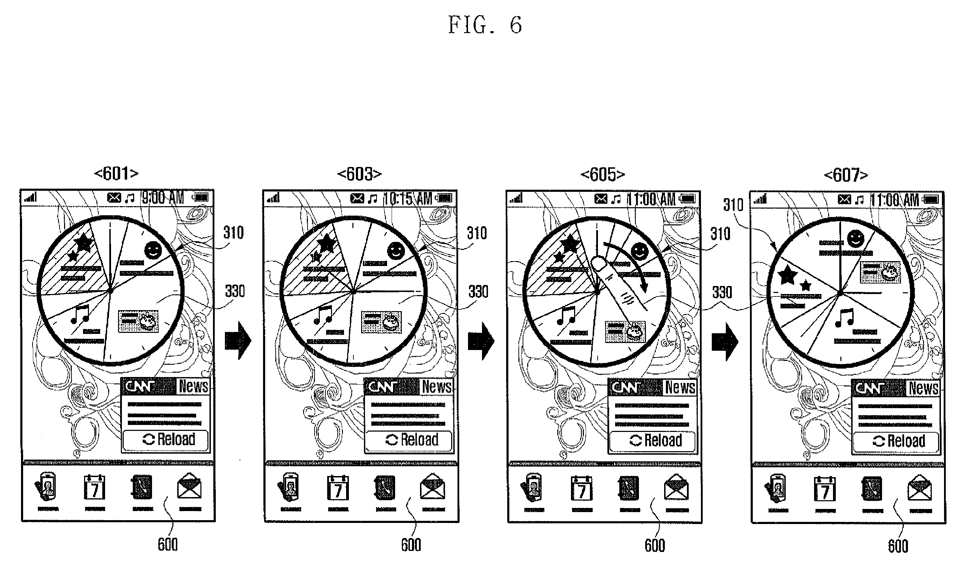

FIG. 6 is a view illustrating a method for providing a history function of associated information mapped to time information according to an exemplary embodiment of the present invention.

Referring to FIG. 6, as shown in reference numeral 601, it is assumed that an information item (e.g., a time & schedule item) 310 including a combination of time information and schedule information is displayed on the display unit. The information item 310 provides time information of a mobile terminal according to a variation (rotation) of an hour hand, a minute hand, or a second hand, and provides schedule information corresponding to the current time on an information area 330. The schedule information may be set by a user and stored in a storage unit. In an exemplary implementation, the schedule information can be provided in one of morning schedule information or afternoon schedule information in units of 12 hours. Moreover, the schedule information can be provided with schedule information of 24 hours or with only information of a time period of 24 hours registered by a user. Moreover, the schedule information may be provided in units of hours, days, weeks, or months. The schedule information is determined according to a user setting and an information item can be created by schedule information.

As shown in reference numerals 603 and 605, as time information goes by, schedule information corresponding to time information is updated and displayed. As illustrated in reference numerals 603 and 605, an area including information of a time period corresponding to time information among schedule information of the information area 230 can be displayed to be distinguished (e.g., by highlighting, hatching, flickering, etc.) from areas of other information.

In the meantime, in states of reference numerals 601, 603, and 605, associated information with respect to the past or the future can be confirmed according to a time information variation. For example, as shown in reference numeral 605, an hour hand or a minute hand of the information item 210 may be selected to input a gesture of rotating clockwise. When the gesture input rotates the hour hand to 3 p.m. as shown, schedule information corresponding to time information of 3 p.m. is displayed on the information area 330. In this case, when the hour hand rotates from 11 a.m. of reference numeral 605 to 2 p.m. of reference numeral 507, schedule information corresponding to a time period may be continuously changed and provided according to a time information variation.

Reference numeral 607 indicates a state in which morning schedule information from reference numeral 601 to reference numeral 605 is changed to afternoon schedule information, and an area including information corresponding to time information of 3 p.m. is displayed to be distinguished from the area including information corresponding to previous time information. In a state of reference numeral 607, as previously illustrated, a reset event can be input. When the reset event is input, time information and schedule information according thereto as illustrated in reference numeral 607, provided time information and schedule information according thereto are initialized and displayed as current time information of the mobile terminal and schedule information according thereto.

Although not shown and described in FIG. 6, an hour hand or a minute hand may be selected in a state of reference numeral 605 to input a gesture of rotating counterclockwise. The gesture input allows a user to confirm a history of associated information with respect to the past. Furthermore, in a case of time information control using the hour hand, a history of associated information can be confirmed in units of hours. In a case of time information control using the minute hand, a fine history of associated information can be confirmed in units of minutes.

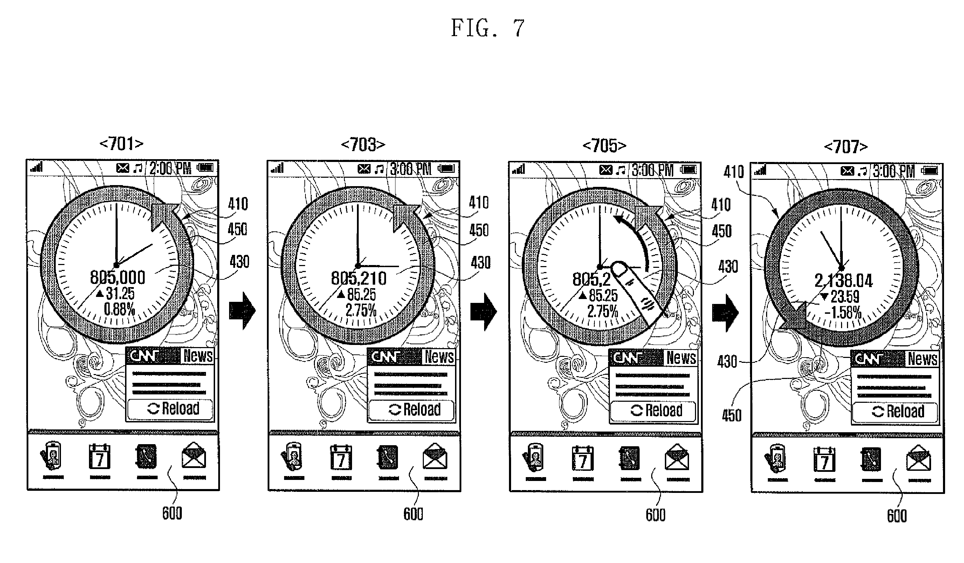

FIG. 7 is a view illustrating a method for providing a history function of associated information mapped to time information according to an exemplary embodiment of the present invention.

Referring to FIG. 7, as shown in reference numeral 701, it is assumed that an information item (e.g., a time & stock item) 410 is displayed on the display unit. The information item 410 provides time information of the mobile terminal according to a variation (rotation) of an hour hand, a minute hand, and a second hand, and provides stock information corresponding to current time information on a first information area 430 and a second information area 450. The stock information can be received from an external source (e.g., a stock company). The stock information may include a current stock price and a rise/fall rate with respect to a specific item registered according to a user setting. Furthermore, the stock information may indicate an average stock and rise/fall rate with respect to all items according to a user setting. In a case of stock information, a history of stock information may be provided.

As shown in reference numerals 703 and 705, as time passes, stock information corresponding to time information is updated and displayed. For example, as shown in reference numerals 703 and 705, a stock price and a rise/fall rate of the first information area 430 can be changed (gradually increased) and displayed. The second information area 450 may indicate a continuous rising state. An advanced degree of an arrow in the second information area 450 can be displayed differently according to a stock information variation. For example, the advanced degree of an arrow in the second information area 450 may be displayed corresponding to a variation in a stock and a rise/fall rate of the first information area 430.

In the meantime, a history of associated information with respect to the past can be confirmed according to a time information variation in states from reference numeral 701 to reference numeral 705. For example, as shown in reference numeral 705, an hour hand or a minute hand may be selected to input a gesture of rotating counterclockwise. As shown in reference numeral 707, when the gesture input rotates an hour hand to 11 a.m., stock information corresponding to time information of 11 a.m. is displayed on the first information area 430 and the second information area 450. In this case, when an hour hand rotates from 3 p.m. of reference numeral 705 to 11 a.m. of reference numeral 707, stock information corresponding to a time period may be continuously changed and provided on the first information area 430 and the second information area 450. Reference numeral 707 indicates a state that a price of a stock falls in a corresponding morning time period.

Furthermore, as illustrated earlier, a reset event input is possible in a state of reference numeral 707. When the reset event is input, provided time information and stock information according thereto as illustrated in reference numeral 707 are initialized and displayed as current time information of the mobile terminal and stock information according thereto.

Although not shown and described in FIG. 7, in a case of time information control using the hour hand, a history of associated information can be confirmed in units of hours. In a case of time information control using the minute hand, a history of fine associated information can be confirmed in units of minutes.

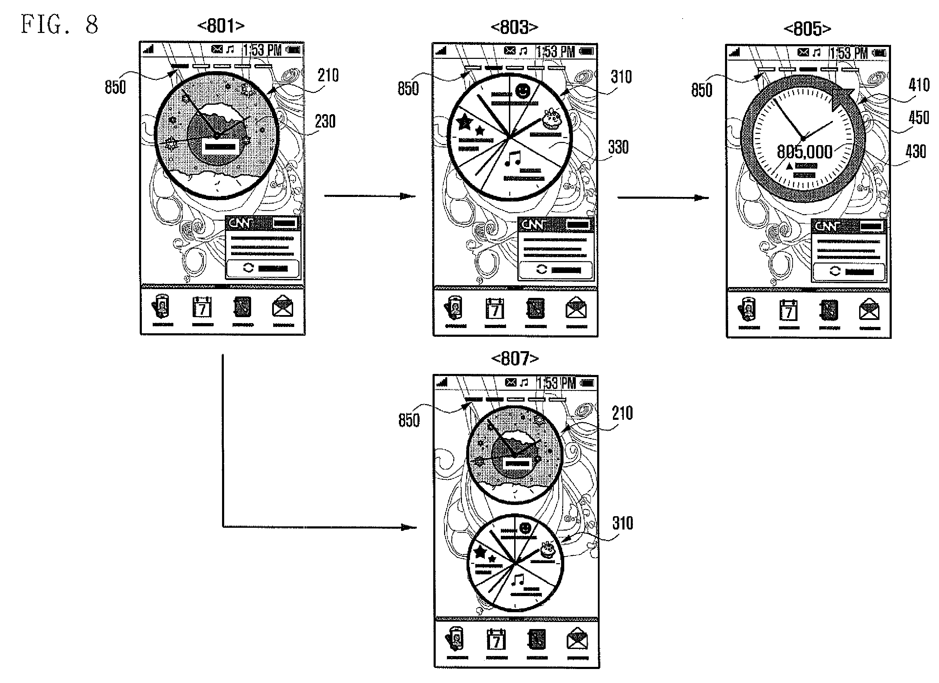

FIG. 8 is a view illustrating a method for providing an information item with time information and associated information according to an exemplary embodiment of the present invention.

Referring to FIG. 8, it is assumed that a time & weather item 210 is displayed on the display unit as shown in reference numeral 801. That is, the time & weather item 210 can be executed in a state in which an idle screen is displayed on the display unit in an exemplary method as mentioned above. For example, the mobile terminal may execute the time & weather item 210 using a hot key button (not shown) in an input unit, a touch input of a toggle area allocated for execution of the time & weather item 210 on the display unit, or menu selection of the menu area. In an exemplary implementation, the toggle area is indicated by reference numeral 850 and indicates an area for toggling between information items. At least one toggle button corresponding to at least one information item fundamentally provided in the mobile terminal or at least one information item defined according to a user setting is displayed on the toggle area 850. Namely, the toggle button may be toggled by a touch input of a soft key or a physical key of an input unit 200. The toggle button can be displayed corresponding to the number of registered information items.

A new information item is executed and a screen thereof is displayed on the display unit in a state of reference numeral 801 is a set way. For example, as illustrated in reference numeral 801, a time & schedule item 310 may be executed by an input of a toggle button executing the time & schedule item 310 on the toggle area 850. Moreover, when the toggle button is input, as illustrated in reference numeral 803, the time & schedule item 310 is displayed on the display unit. Such an operation may execute the time & stock item 410 as illustrated in reference numeral 805.

Meanwhile, respective information items as illustrated in reference numeral 801 to reference numeral 803 may be combined and displayed. For example, a toggle button for simultaneous display of another information item may be input in a state of reference numeral 801. Furthermore, after input of the toggle button, a toggle button of the information item to be executed in the toggle area 850 can be input. It is assumed that an information item corresponding to an input toggle button is a time & schedule item 310. As illustrated in reference numeral 801, in a state that the time & weather item 210 is displayed, the time & weather item 210 and the time & schedule item 310 are simultaneously displayed as illustrated in reference numeral 807 according to simultaneous display input of the time & schedule item 310.

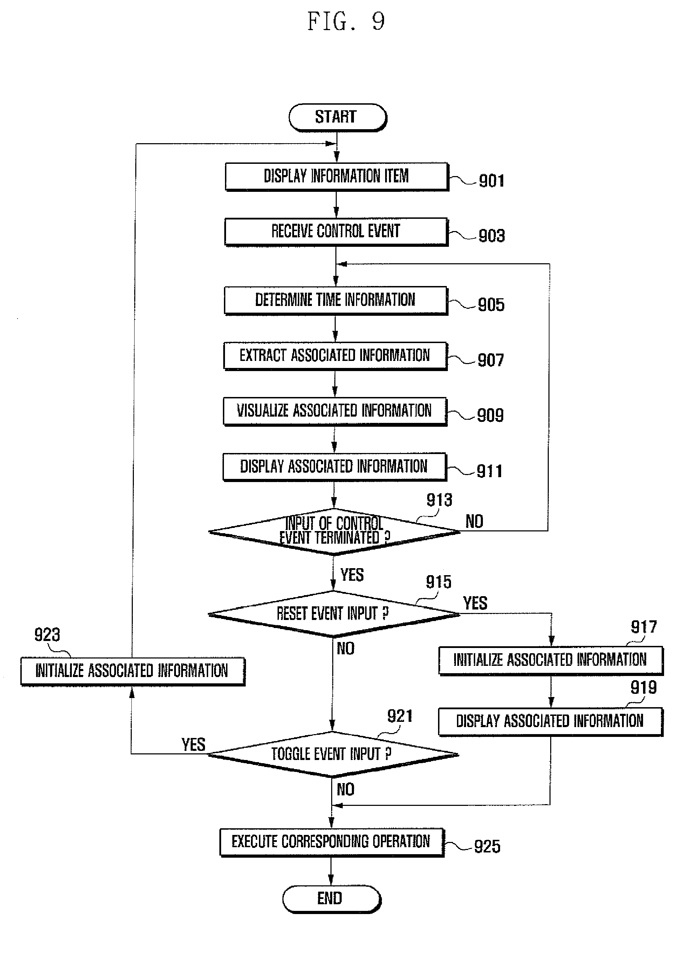

FIG. 9 is a flowchart illustrating a method for controlling a history function of associated information mapped to time information according to an exemplary embodiment of the present invention.

Referring to FIG. 9, in step 901, a controller may display an information item according to a user selection on an idle screen of a display unit. For example, the controller may display at least one item among information items, such as a time & weather item 210 including a combination of time information and weather information, a time & schedule item 310 including a combination of time information and schedule information, or a time & stock item 410 including a combination of time information and stock information.

In step 903, the controller receives a control event controlling time information in a state that the information item is displayed. For example, when a user inputs a gesture of rotating an hour hand or a minute hand of an information item clockwise (or counterclockwise) while an information item is displayed on the display unit, the controller receives an input signal. The control event may include a switching event, a move event, a drag event, and a flick event.

Subsequently, in step 905, when the controller detects an input of a control event, it determines time information changed according to the control event. Furthermore, the controller extracts associated information corresponding to changed time information in step 907. For example, the controller extracts associated information of an information item corresponding to changed time information from the storage unit 300 according to the control of the time information.

In step 909, the controller visualizes the extracted associated information and displays it on an information area of an information item in step 911. For example, the controller extracts data (e.g., numerical data of a precipitation amount received and stored from an external source) constituting associated information corresponding to time information, and converts the extracted data into data (e.g., GUI data) capable of being displayed on the display unit. Furthermore, the converted data is displayed on an information area of an information item. That is, the controller updates and displays previously displayed associated information as associated information corresponding to time information according to a time information variation.

In step 913, the controller determines whether input of the control event is terminated. For example, the controller may detect whether a gesture input of rotating an hour hand is cancelled in the information item. If it is determined in step 913 that the input of the control event is not terminated, the controller may update and display associated information with respect to time information changed according to a control event as mentioned above.

In contrast, if it is determined in step 913 that the input of the control event is terminated, the controller determines whether a reset event is input in step 915. The reset event indicates input initializing time information changed according to a control event and associated information therewith as current time information of a mobile terminal and information associated therewith. The reset event can be achieved according to a physical key input of a touch area allocated on a display unit or an input unit in a set way.

If it is determined in step 915 that the controller detects the input of the reset event, it initializes changed time information and associated information according to a control event in step 917, and displays associated information corresponding to current time information of the mobile terminal on an information area in step 919. Furthermore, the controller may control execution of a corresponding operation requested from the user in step 925. For example, the controller may perform corresponding operations, such as display of another information item and termination of information item display as previously illustrated.

In contrast, if it is determined in step 915 that the input of the reset event is not detected, the controller determines whether a toggle event is input in step 921. The toggle event indicates an event converting an information event currently displayed on the display unit into at least one other information item as previously illustrated. The toggle event can be achieved according to a physical key input of a touch area allocated on a display unit or an input unit in a set way.

Subsequently, if it is determined in step 921 that the controller detects input of the toggle event, it initializes time information of an information item changed according to the control event and associated information in step 923. Next, the controller proceeds to step 901 and may display another information item selected according to a toggle event and control execution of following operations. In this case, upon displaying another information item, current time information of a mobile terminal and associated information corresponding thereto are displayed.

In contrast, if it is determined in step 921 that the input of the toggle event is not detected, the controller may control execution of a corresponding operation requested from the user in step 925. For example, as previously illustrated, a continuous or instantaneous display operation of time information changed according to a control event and associated information may be controlled or execution of a corresponding operation entering an idle screen may be controlled according to a mobile terminal function termination request of a user.

A method for providing a history function of time information and associated information may be implemented in a program command form capable of being performed through various computer means to be recorded in a computer-readable recording medium. In this case, the computer-readable recording medium may include a program command, a data file, and a data structure separately or in a combination thereof. Meanwhile, the program command recorded in a recording medium may be a command designed or configured specially for exemplary embodiments of the present invention, or usably known to a person having ordinary skill in the art.

The computer-readable recording medium includes a hardware device specially configured to store and execute a program command in a magnetic media, such as a hard disc, a floppy disc, and a magnetic tape, in an optical media, such as a Compact Disc-Read Only Memory (CD-ROM) or a Digital Video Disc (DVD), in a magneto-optical media, such as an optical disk, a ROM, a Random Access Memory (RAM), and a flash memory. Furthermore, the program command includes a high-level language code executable by a computer using an inter-print as well as a machine language code, such as a code created by a compiler. The hardware device can be configured as at least one software module to execute an operation of exemplary embodiments of the present invention.

While the invention has been shown and described with reference to certain exemplary embodiments thereof, it will be understood by those skilled in the art that various changes in form and details may be made therein without departing from the spirit and scope of the present invention as defined in the appended claims and their equivalents.

## Claims

1. A method for providing information in a mobile terminal, the method comprising:
displaying an information item including a combination of time information and associated information;
updating and displaying the associated information as time information goes by;
extracting associated information corresponding to changed time information when the time information changes according to a control event; and
displaying a history of associated information corresponding to the changed time information.

2. The method of claim 1, wherein the control event comprises a gesture input of rotating at least one of an hour hand and a minute hand of the information item.

3. The method of claim 2, wherein the displaying of the associated information visualizes and displays the extracted associated information on an information area of the information item.

4. The method of claim 3, further comprising:
determining whether a reset event is input after displaying the associated information;
initializing changed time information and associated information according to the control event when the reset event is input; and
displaying current time information of the mobile terminal and information associated with the current time information;

5. The method of claim 4, wherein the reset event comprises an input for initializing time information and associated information changed according to the control event as the current time information of the mobile terminal and the information associated with the current time information.

6. The method of claim 3, further comprising:
determining whether a toggle event is input after the displaying of the associated information; and
displaying another information item selected according to the toggle event when the toggle event is input.

7. The method of claim 6, further comprising initializing time information and associated information of the information item changed according to the control event when the toggle event is input.

8. The method of claim 7, wherein the toggle event comprises an input for converting a currently displayed information item into at least one other information item.

9. A mobile terminal comprising:
a display unit for displaying at least one information item including a combination of time information and associated information;
a storage unit for storing associated information corresponding to the time information; and
a controller for controlling display of at least one information item including a combination of time information and associated information of the mobile terminal, and for controlling display of an associated information history corresponding to changed time information.

10. The mobile terminal of claim 9, wherein the controller controls an update of the time information and the associated information according to a control event for rotating at least one of an hour hand and a minute hand of the information item when the control event is input.

11. The mobile terminal of claim 10, wherein the controller displays changed time information through an information item according to the control event, and extracts and displays information associated with the changed time information on an information area of the information item.

12. The mobile terminal of claim 11, wherein the controller initializes changed time information and information associated with the changed time information according to the control event when a reset event is input, and displays current time information of the mobile terminal and information associated with the current time information.

13. The mobile terminal of claim 11, wherein the controller initializes the changed time information of the information item and information associated with the changed time information according to the control event when a toggle event is input, and controls display of another information item selected according to the toggle event.

14. The mobile terminal of claim 9, wherein the display unit displays a toggle area for toggling between information items on an idle screen.

15. The mobile terminal of claim 14, wherein the display unit further comprises an associated information selection menu for selecting a detailed function of associated information.
